# EUROPEAN PATENT SPECIFICATION

(11) **EP 3 916 279 B1**
(45) Date of publication and mention of the grant of the patent: **04.09.2024**
(21) Application number: 21176948.4
(22) Date of filing: 31.05.2021
(51) Int. Cl.: F16K 31/385, F16K 31/524

(54) **PUSH SWITCH, PUSH SWITCH VALVE CORE AND FAUCET**
DRUCKSCHALTER, DRUCKSCHALTERVENTILKERN UND WASSERHAHN
ACTIONNEUR À BOUTON-POUSSOIR, INSERT DE VANNE AVEC ACTIONNEUR À BOUTON-POUSSOIR ET ROBINET

(30) Priority: 29.05.2020 CN 202010475379
(43) Date of publication of application: 01.12.2021
(73) Proprietor: Xiamen Solex High-tech Industries Co., Ltd., 361000 Fujian (CN)
(72) Inventor: LIN, Fangqi, Xiamen, 361000 (CN); HU, Lihong, Xiamen, 361000 (CN); CHEN, Wenxing, Xiamen, 361000 (CN)
(74) Representative: Verscht, Thomas Kurt Albert

(56) References cited:
- WO-A1-2019/153670
- CN-U- 212 564 512
- US-A1- 2019 178 398
- US-A1- 2020 003 312

## Description

### FIELD OF THE DISCLOSURE

The present disclosure relates to sanitary wares, in particular relates to a push switch, a push switch valve core and a faucet.

### BACKGROUND OF THE DISCLOSURE

The existing push switch valve core (i.e., push button valve core) adopts a ballpoint pen ratchet wheel structure. The conventional ballpoint pen ratchet wheel structure comprises a push rod, a movable ratchet wheel and a fixed ratchet wheel; the push rod moves up and down in an axial direction, and the movable ratchet wheel moves up and down in the axial direction and rotates about an axis; the fixed ratchet wheel is generally disposed on a housing to provide a limiting for a high position and a low position of the movable ratchet wheel. A work spring abuts the movable ratchet wheel, the push rod is separated from the movable ratchet wheel, so that the push rod is in a suspended state and shakes to some degree.

In the existing push switch valve core, a pilot valve is usually opened due to water pressure. When the water pressure is low, a sealing cup of the pilot valve is not easily opened and a flow rate is small.

With regard to the prior art attention is drawn to US 2019/178398 A1 from which a valve actuation device for actuating a valve, such as a sanitary valve, in an axial actuation movement for a first valve function, illustratively a shut-off function, and in a rotary actuation movement for a second valve function, illustratively a quantity regulation or mixing function, and a sanitary valve equipped with such a valve actuation device are known.

Further, from WO 2019/153670 A1 a switch valve core and a water outlet device are known. The switch valve core comprises a driven part, a transmission shaft, a sealing member, a diaphragm, a pressure chamber and a valve body. The pressure chamber is used for forming the same water pressure on two sides of the diaphragm to balance water pressure, so that the resistance against an operated member is small and stable, and the operation force value of the driven part does not suddenly change as the water pressure changes. An internal cavity of the sealing member can absorb an impact force of an operating force on the driven part during an idle running stage, and during two or more processes in which the sealing member is compressed and deformed, the force fed back to the transmission shaft and the driven part is stable and continuous.

Furthermore, from US 2020/003312 A1 a flow regulating switch valve is known, which includes a valve core that includes a switch assembly configured to drive a diaphragm assembly to open or close a water outlet, and also includes a flow regulating assembly that comprises a rotating ring, a sliding block, and a magnet. A control key is configured to control the switch assembly. The rotating ring is connected to the control key and includes an inclined plane that transitions from high to low and is configured to drive the sliding block to slide up and down such that the sliding block drives the magnet to move up and down. The magnet is configured to control the diaphragm assembly to regulate a size of the water outlet.

### BRIEF SUMMARY OF THE DISCLOSURE

The present disclosure provides a push switch, an up-down push switching can be achieved by two parts, and the structure is simple and compact.

The present invention relates to a push switch valve core as defined in claim 1.

Preferred embodiments are disclosed in the dependent claims.

In a preferred embodiment, the rotating diverting member and the diverting matching member are first ratchet wheel inclined surfaces.

In a preferred embodiment, the low-position positioning member is a rotating ratchet wheel, a side wall of which is circumferentially disposed with a plurality of ratchet blocks at intervals; the giving passage is defined between two adjacent ratchets blocks.

A side of the ratchet blocks facing the push operate member is disposed with the first ratchet wheel inclined surfaces.

In a preferred embodiment, the limiting member and the limiting matching member are second ratchet wheel inclined surfaces; a side of the ratchet blocks away from the push operate member is disposed with the second ratchet wheel inclined surfaces.

In a preferred embodiment, the push operate member is circumferentially disposed with a plurality of ribs disposed below the first ratchet wheel inclined surface along the axial direction; upper surfaces of the ribs disposed along the axial direction are disposed with the second ratchet wheel inclined surfaces.

In a preferred embodiment, the sealing member comprises a sealing cup and a sealing plug that is disposed at an end of the switch shaft.

When the push operate member moves to the low position, the sealing plug seals a pressure relief hole of the sealing cup, pressure of stored water in a pressure holding cavity disposed between the sealing cup and the valve body increases, and the sealing cup is driven to move downward along the axial direction of the valve body to close the water outlet.

When the push operate member moves to the high position, the sealing plug opens the pressure relief hole of the sealing cup, pressure of relief water in the pressure holding cavity disposed between the sealing cup and the valve body decreases, and the sealing cup is driven to move upward along the axial direction of the valve body to open the water outlet.

In a preferred embodiment, the switch shaft is interlocked to a sealing cup base configured to be disposed with the sealing cup, and when the switch shaft moves upward, the sealing cup base drives the sealing cup to open the water outlet.

The present disclosure further discloses a faucet, which is disposed with the aforementioned push switch valve core.

In a preferred embodiment, the faucet is a fixed faucet or a pull-out faucet.

Compared with the existing techniques, the technical solution has the following advantages.
1. The present disclosure provides a push switch, the push operate member is configured to be switched between the high position and the low position due to two components being consisted of the push operate member and the low-position positioning member. In addition, whenever the push operate member is in the high position or the low position, the reset spring is always in a compressed state, so that the push operate member will not shake.
2. The present disclosure provides a push switch valve core, the sealing cup base is interlocked to the switch shaft. When the switch shaft moves upward, the sealing cup base accordingly moves upward to drive the sealing cup to open the water outlet, and the water outlet is ensured to be also opened in a low pressure and large flow is ensured when being in the low pressure.

### BRIEF DESCRIPTION OF THE DRAWINGS

In order to clearly describe the technical solutions of the embodiments of the present disclosure, the drawings used for the embodiments will be briefly described below. It is obvious that the drawings described below are merely some embodiments of the present disclosure. Other drawings can be obtained based on the drawings by those skilled in the art without creative work.
Fig. 1 illustrates a perspective view of a push switch valve core of Embodiment 1 of the present disclosure;
Fig. 2 illustrates an exploded view of the push switch valve core of Embodiment 1 of the present disclosure;
Fig. 3 illustrates a cross-sectional view of the push switch valve core of Embodiment 1 of the present disclosure when water is stopped;
Fig. 4 illustrates a cross-sectional view of the push switch valve core of Embodiment 1 of the present disclosure when the water is opened;
Fig. 5 illustrates a cross-sectional view of a push operate member of Embodiment 1 of the present disclosure;
Fig. 6 illustrates a schematic view of a low-position positioning member of Embodiment 1 of the present disclosure;
Fig. 7 illustrates a cross-sectional view of a pull rod of Embodiment 1 of the present disclosure;
Figs. 8-10 illustrate schematic views of Embodiment 1of the present disclosure when the push operate member and the low-position positioning member move from a high position to a low position;
Fig. 11 illustrates a schematic view of a faucet of Embodiment 1 of the present disclosure;
Fig. 12 illustrates a schematic view of a faucet of Embodiment 2 of the present disclosure.

### DETAILED DESCRIPTION OF THE EMBODIMENTS

The technical solutions of the embodiments of the present disclosure will be clearly and completely described below in combination with the drawings in embodiments of the present disclosure. It is obvious that the embodiments described below are merely some embodiments of the present disclosure rather than all embodiments. It is intended that the scope of the present disclosure cover all other embodiments obtained based on the embodiments of the present disclosure by those skilled in the art without creative work.

### Embodiment 1

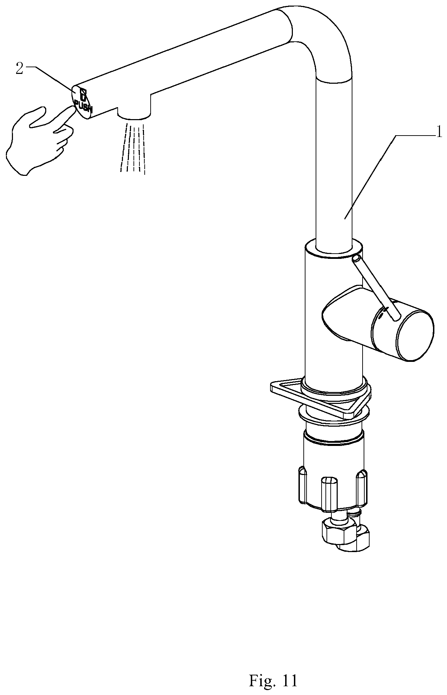

Referring to Fig. 11, this embodiment provides a fixed water outflow faucet, and a push switch valve core 2 (i.e., push button valve core) is disposed on a faucet body 1.

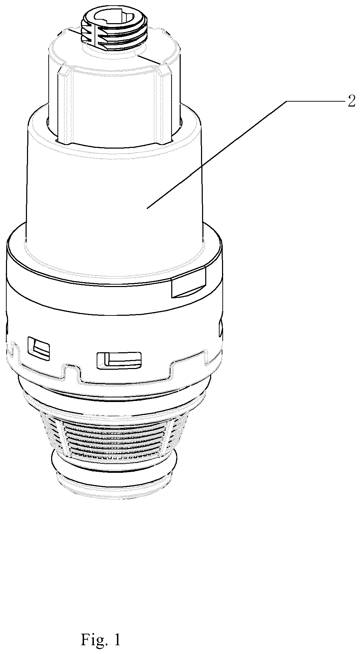

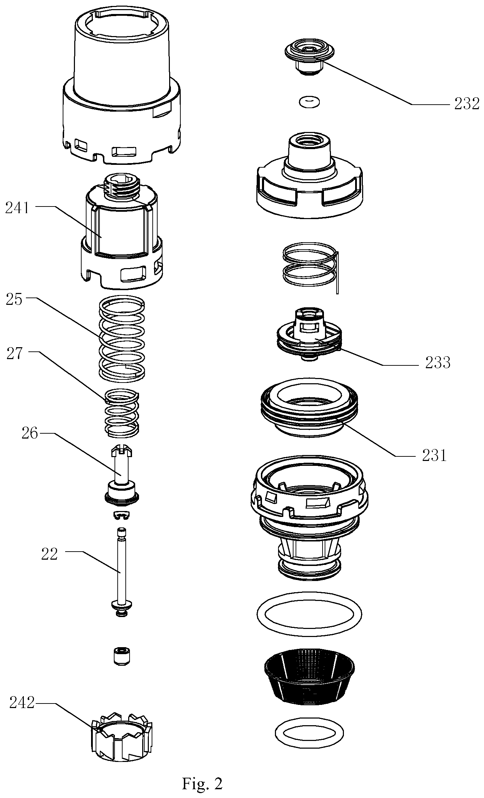

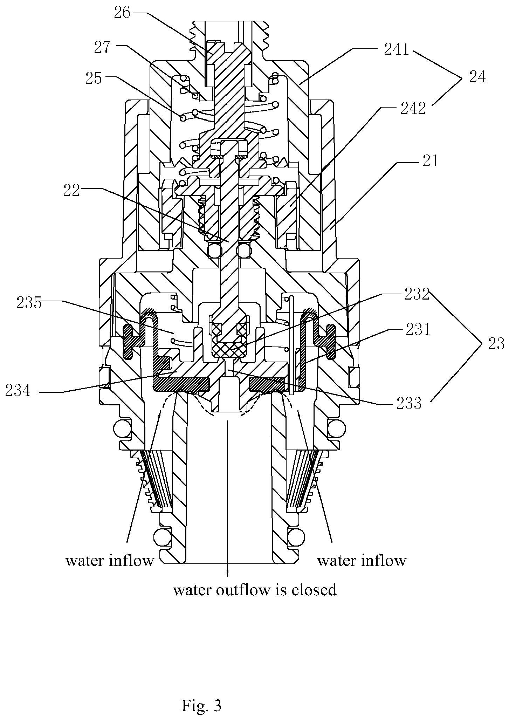

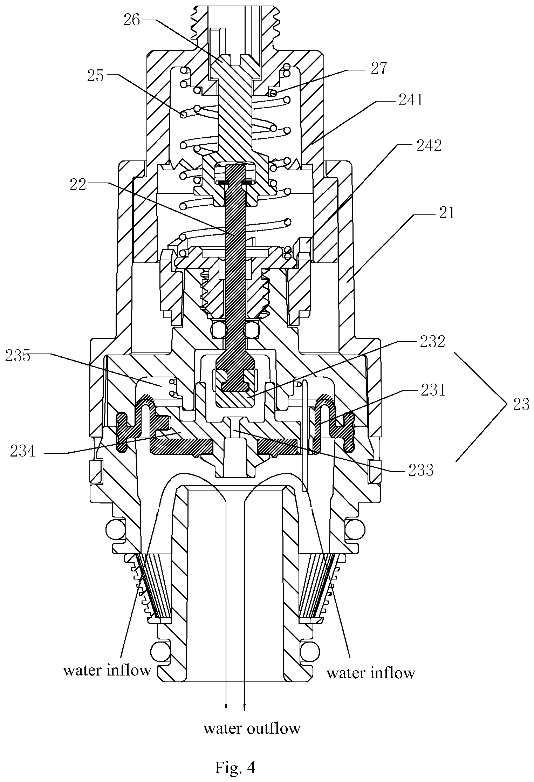

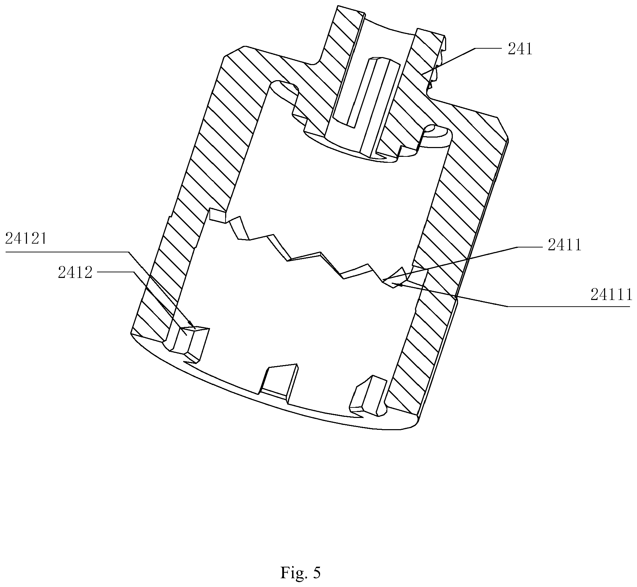

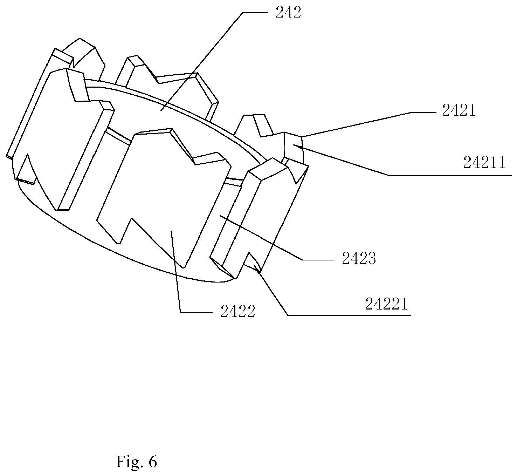

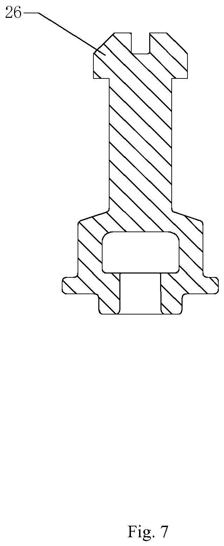

Further, referring to Figs. 1-10, the push switch valve core 2 comprises a valve body 21, a switch shaft 22, a sealing member 23 and a push switch 24 (i.e., push button).

The push switch 24 drives the sealing member 23 to move along an axial direction of the valve body 21 to open or close a water outlet of the valve body 21 through the switch shaft 22.

In this embodiment, the push switch 24 comprises a push operate member 241 and a low-position positioning member 242.

The push operate member 241 moves between a high position or a low position in the axial direction under an external force; the push operate member 241 comprises a rotating diverting member 2411 configured to cooperate with the low-position positioning member 242 and a limiting member 2412 configured to be locked to the low-position positioning member 242.

The low-position positioning member 242 comprises a diverting matching member 2421 and a limiting matching member 2422 disposed up and down in the axial direction and a giving passage or passage or axial passage 2423 penetrating in the axial direction.

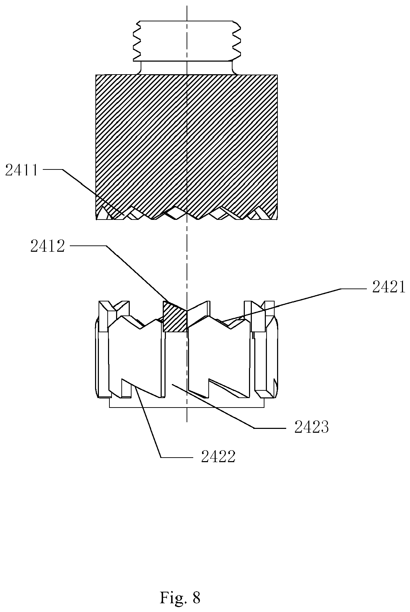

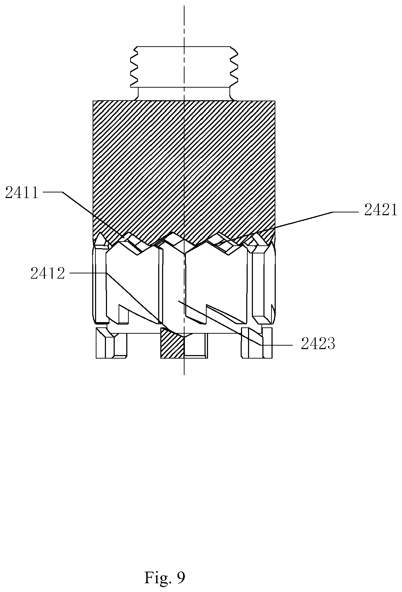

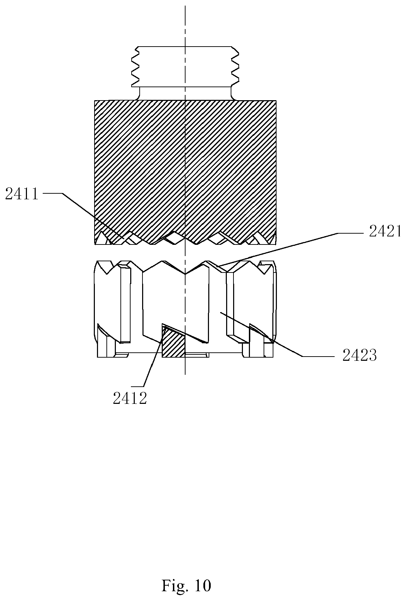

Referring to Fig. 8, when the push operate member 241 is in the high position, the limiting member 2412 is aligned with the giving passage 2423, and the rotating diverting member 2411 is separated from the diverting matching member 2421 at a certain distance in the axial direction; referring to Fig. 9, when the push operate member 241 is in the low position, the limiting member 2412 passes through the giving passage 2423. Referring to Fig. 10, the rotating diverting member 2411 cooperates with the diverting matching member 2421 to drive the low-position positioning member 242 to rotate about the axial direction at a certain angle, so that the limiting member 2412 and the limiting matching member 2422 are upwardly limited along the axial direction.

In the push switch 24, the push operate member 241 can be switched between the high position and the low position due to two components being consisted of the push operate member 241 and the low-position positioning member 242.

In detail, in this embodiment, the rotating diverting member 2411 comprises a plurality of first ratchet wheel inclined surfaces 24111, and the diverting matching member 2421 comprises a plurality of first ratchet wheel matching inclined surfaces 24211 (i.e., a plurality of first ratchet wheel inclined surfaces). The plurality of first ratchet wheel inclined surfaces 24111 cooperate with the plurality of first ratchet wheel matching inclined surfaces 24211 to drive the low-position positioning member 242 to rotate at the certain angle in the axial direction. The low-position positioning member 242 is a rotating ratchet wheel, and a side wall of which is circumferentially disposed with a plurality of ratchet blocks at intervals; the giving passage 2423 is defined between two adjacent ratchet blocks.

A side of the ratchet blocks facing the push operate member 241 is disposed with the diverting matching member 2421.

The limiting member 2412 comprises a plurality of second ratchet wheel inclined surfaces 24121, and the limiting matching member 2422 comprises a plurality of second ratchet wheel matching inclined surfaces (i.e., a plurality of second ratchet wheel inclined surfaces); a side of the ratchet blocks away from the push operate member 241 is disposed with the limiting matching member 2422.

The push operate member 241 is circumferentially disposed with a plurality of ribs disposed below the rotating diverting member 2411 along the axial direction; the plurality of ribs define the limiting member 2412, and an upper surface of the limiting member 2412 disposed in the axial direction is disposed with the second ratchet wheel inclined surfaces 24121.

When being operated, the push operate member 241 is firstly pressed, at this time, the ribs are disposed in the rotating ratchet wheel 242 through the giving passage 2423; the rotating ratchet wheel 242 remains stationary, and the push operate member 241 moves downward along the axial direction. Referring to Fig. 9, when the push operate member 241 moves to enable the first ratchet wheel inclined surfaces 24111 of the rotating diverting member 2411 to abut the first ratchet wheel matching inclined surfaces 24211 of the diverting matching member 2421, the ribs passes through the giving passage 2423. Push force generated due to the ratchet wheel inclined surfaces pushing the ratchet wheel matching inclined surfaces pushes the rotating ratchet wheel 242 to rotate. After the rotating ratchet wheel 242 rotates one of the first ratchet wheel inclined surfaces, the push operate member 241 and the rotating ratchet wheel 242 are released from a cooperation of the pushing, referring to Fig. 10, after the user releases the push operate member 241, the ribs are configured to cooperate with and be limited to the ratchet blocks through a cooperation between the second ratchet wheel inclined surfaces and the second ratchet wheel matching inclined surfaces, so that the push operate member 241 is secured in the low position.

According to the invention, the push switch further comprises a work spring 25, one end of the work spring 25 is disposed on the valve body 21 and defines a fixed end, and the other end abuts the push operate member 241; when the push operate member 241 is in the low position or the high position, the work spring 25 is always in a compressed state. When the push operate member 241 is in the high position, it abuts the valve body 21, so that the push operate member 241 will not shake.

According to the invention, the push operate member 241 is connected to the switch shaft 22 by a pull rod 26, so that the push switch 24 is interlocked to the switch shaft 22. In detail, the push operate member 241 is disposed with a through passage in the axial direction, and an inner wall of the through passage radially extends to define a limiting protruding platform; an upper end of the pull rod 26 radially extends outward to define a limiting surface. In this way, an end of the pull rod 26 passes through the limiting protruding platform and is then downwardly interlocked along the axial direction of the push operate member 241 due to the limiting surface and the limiting protruding surface. In addition, a lower end of the pull rod 26 is an open surface in communication with an installation cavity disposed in the pull rod 26, so that the pull rod 26 is interlocked to the switch shaft 22. An upper end of the switch shaft 22 is disposed in the installation cavity through the open surface and is fixedly connected to the pull rod 26.

In addition, in this embodiment, a water shut-off spring 27 is further disposed between the valve body 21 and the pull rod 26 to ensure the sealing member 23 to seal the water outlet when water is stopped. The pull rod 26 can be secured at a water shut-off position due to elastic reset force of the water shut-off spring 27, so that the sealing member 23 can reliably seal the water outlet.

In this embodiment, the sealing member 23 comprises a sealing cup 231 and a sealing plug 232 that is disposed on a lower end of the switch shaft 22; when the push operate member 241 moves to the low position, the sealing plug 232 seals a pressure relief hole of the sealing cup 231, a pressure of stored water in a pressure holding cavity 235 disposed between the sealing cup 231 and the valve body 21 increases, and the sealing cup 231 is driven to move downward along the axial direction of the valve body 21 to close the water outlet.

When the push operate member 241 moves to the high position, the sealing plug 232 opens the pressure relief hole 233 of the sealing cup 231, a pressure of relief water in the pressure holding cavity disposed between the sealing cup 231 and the valve body 21 decreases, so that the sealing cup 231 is driven to move upward along the axis of the valve body 21 to open the water outlet.

In this embodiment, the switch shaft 22 is interlocked to a sealing cup base 234 disposed with the sealing cup 231. When the shift shaft 22 moves upward, the sealing cup base 234 drives the sealing cup 231 to open the water outlet. When the shift shaft 22 moves upward, the sealing cup base 234 accordingly moves upward to drive the sealing cup 231 to open the water outlet due to the sealing cup base 234 being interlocked to the switch shaft 22, the water outlet is ensured to be also opened in a low pressure, and large flow is ensured when being in the low pressure. In detail, a side wall of the switch shaft 22 radially extends outward to define a protruding platform, and the sealing cup base 234 is disposed with a buckle structure. When the switch shaft 22 moves upward, the sealing cup base 234 is driven to accordingly move upward due to the protruding platform and the buckle structure.

### Embodiment 2

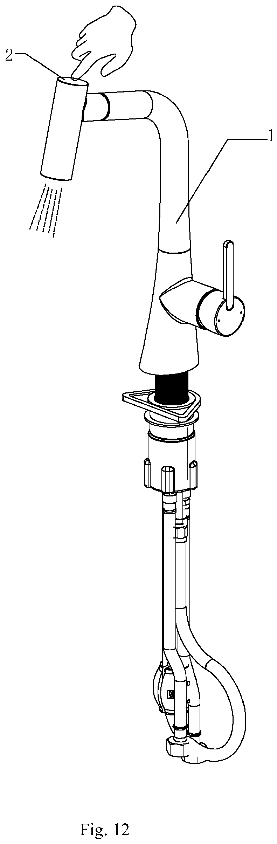

This embodiment differs from Embodiment 1 in that the faucet in this embodiment is a pull-out faucet, referring to Fig. 12, the rest is the same as Embodiment 1 and will not be further described.

In the description of this specification, the terms "embodiment", "example", "detailed embodiment", etc. means that at least one of the embodiment or the example of the present disclosure comprises detailed feature, structure, material or characteristic described in combination with the embodiment or the example. In this specification, the brief description of the above-mentioned terms do not necessarily refer to the same embodiment or the example. Further, the detailed features, the structures, the materials or the characteristics can be appropriately combined to any one or multiple embodiments or examples.

The above-mentioned preferred published embodiments of the present disclosure merely help to describe the present disclosure. The preferred embodiment does not describe all details, and the embodiments of the disclosure is not only limited thereto. It is obvious that many modifications and variations can be made according to the specification. The embodiments selected and further described in this specification better explain the principles and practical applications of the present disclosure, so that those skilled in the art can well understand and utilize the present disclosure. The present invention is only limited by the appended claims.

## Claims

1. A push switch valve core (2), comprising a push switch (24) which comprises a push operate member (241) and a low-position positioning member (242);
the push operate member (241) moves between a high position or a low position along an axial direction; the push operate member (241) comprises a rotating diverting member (2411) configured to cooperate with the low-position positioning member (242) and a limiting member (2412) configured to be locked to the low-position positioning member (242);
the low-position positioning member (242) comprises a diverting matching member (2421) and a limiting matching member (2422) disposed up and down along the axial direction and a giving passage (2423) penetrating in the axial direction;
when the push operate member (241) is disposed in the high position, the limiting member (2412) is aligned with the giving passage (2423), and the diverting member (2411) is separated from the diverting matching member (2421) by a certain distance along the axial direction; when the push operate member (241) is disposed in the low position, the limiting member (2412) passes through the giving passage (2423), and the diverting member (2411) cooperates with the diverting matching member (2421) to drive the low-position positioning member (242) to rotate about the axial direction at a certain angle, so that the limiting member (2412) and the limiting matching member (2422) are upwardly limited along the axial direction, wherein the push switch (24) further comprises a work spring (25), one end of the work spring (25) is a fixed end, and the other end abuts the push operate member (241); **characterized in that**
when the push operate member (241) is in the low position or the high position, the work spring (25) is always in a compressed state, wherein the push switch valve core (2) further comprises a sealing member (23), a pull rod (26) and a switch shaft (22), wherein the push operate member (241) is connected to the switch shaft (22) by the pull rod (26), so that the push switch (24) is interlocked to the switch shaft (22), wherein a lower end of the pull rod (26) is an open surface in communication with an installation cavity disposed in the pull rod (26) so that the pull rod (26) is interlocked to the switch shaft (22), wherein an upper end of the switch shaft (22) is disposed in the installation cavity through the open surface and is fixedly connected to the pull rod (26), wherein the push switch (24) further comprises a valve body (21) and a water shut-off spring (27), wherein the water shut-off spring (27) is further disposed between the push operate member (241) and the pull rod (26) to ensure the sealing member (23) to seal a water outlet when water is stopped.

2. The push switch valve core (2) according to claim 1, **characterized in that**: the rotating diverting member (2411) and the diverting matching member (2421) are first ratchet wheel inclined surfaces (24111).

3. The push switch valve core (2) according to claim 2, **characterized in that**: the low-position positioning member (242) is a rotating ratchet wheel (242), a side wall of which is circumferentially disposed with a plurality of ratchet blocks at intervals; the giving passage (2423) is defined between two adjacent ratchets blocks;
a side of the ratchet blocks facing the push operate member (241) is disposed with the first ratchet wheel inclined surfaces (2411).

4. The push switch valve core (2) according to claim 3, **characterized in that**: the limiting member (2412) and the limiting matching member (2422) are second ratchet wheel inclined surfaces (24121); a side of the ratchet blocks away from the push operate member (241) is disposed with the second ratchet wheel inclined surfaces (24121).

5. The push switch valve core (2) according to claim 4, **characterized in that**: the push operate member (241) is circumferentially disposed with a plurality of ribs disposed below the first ratchet wheel inclined surface (24111) along the axial direction; upper surfaces of the ribs disposed along the axial direction are disposed with the second ratchet wheel inclined surfaces (24121).

6. A push switch valve core (2) according to any one or more of claims 1 to 5, wherein
the push operate member (241) drives the sealing member (23) to move along an axial direction of the valve body (21) to open or close the water outlet of the valve body (21) by the switch shaft (22).

7. The push switch valve core (2) according to claim 6, **characterized in that**: the sealing member (23) comprises a sealing cup (231) and a sealing plug (232) that is disposed at an end of the switch shaft (22);
when the push operate member (241) moves to the low position, the sealing plug (232) seals a pressure relief hole (233) of the sealing cup (231), pressure of stored water in a pressure holding cavity (235) disposed between the sealing cup (231) and the valve body (21) increases, and the sealing cup (231) is driven to move downward along the axial direction of the valve body (21) to close the water outlet;
when the push operate member (241) moves to the high position, the sealing plug (232) opens the pressure relief hole (233) of the sealing cup (231), pressure of relief water in the pressure holding cavity (235) disposed between the sealing cup (231) and the valve body (21) decreases, and the sealing cup (231) is driven to move upward along the axial direction of the valve body (21) to open the water outlet.

8. The push switch valve core (2) according to claim 7, **characterized in that**: the switch shaft (22) is interlocked to a sealing cup (231) base configured to be disposed with the sealing cup (231), and when the switch shaft (22) moves upward, the sealing cup (231) base drives the sealing cup (231) to open the water outlet.

9. A faucet, which is disposed with the push switch valve core (2) according to any one or more of claims 6 to 8.

10. The faucet according to claim 9, **characterized in that**: the faucet is a fixed faucet or a pull-out faucet.

## Patentansprüche

1. Ein Druckschalterventilkern (2), der einen Druckschalter (24) aufweist, welcher ein Druckbedienungsglied (241) und ein Niedrigpositionspositionierungsglied (242) aufweist;
das Druckbedienungsglied (241) bewegt sich zwischen einer hohen Position oder einer niedrigen Position entlang einer axialen Richtung; das Druckbedienungsglied (241) weist ein Drehablenkglied (2411), das konfiguriert ist, um mit dem Niedrigpositionspositionierungsglied (242) zusammenzuarbeiten, und ein Begrenzungsglied (2412), das konfiguriert ist, um an dem Niedrigpositionspositionierungsglied (242) verriegelt zu sein, auf;
das Niedrigpositionspositionierungsglied (242) weist ein Ablenkpassglied (2421) und ein Begrenzungspassglied (2422), das auf und ab entlang der axialen Richtung angeordnet ist, und einen in der axialen Richtung durchdringenden Gebedurchlass (2423) auf;
wenn das Druckbedienungsglied (241) in der hohen Position angeordnet ist, ist das Begrenzungsglied (2412) mit dem Gebedurchlass (2423) ausgerichtet, und das Ablenkglied (2411) ist von dem Ablenkpassglied (2421) durch einen bestimmten Abstand entlang der axialen Richtung getrennt; wenn das Druckbedienungsglied (241) in der niedrigen Position angeordnet ist, verläuft das Begrenzungsglied (2412) durch den Gebedurchlass (2423) und das Ablenkglied (2411) arbeitet mit dem Ablenkpassglied (2421) zusammen, um das Niedrigpositionspositionierungsglied (242) anzutreiben, um sich um die axiale Richtung um einen bestimmten Winkel zu drehen, so dass das Begrenzungsglied (2412) und das Begrenzungspassglied (2422) nach oben entlang der axialen Richtung begrenzt sind, wobei der Druckschalter (24) ferner eine Arbeitsfeder (25) aufweist, ein Ende der Arbeitsfeder (25) ist ein festes Ende und das andere Ende liegt an dem Druckbedienungsglied (241) an; **dadurch gekennzeichnet, dass**, wenn das Druckbedienungsglied (241) in der niedrigen Position oder der hohen Position ist, ist die Arbeitsfeder (25) immer in einem zusammengedrückten Zustand, wobei der Druckschaltventilkern (2) ferner ein Dichtungsglied (23), eine Zugstange (26) und einen Schaltschaft (22) aufweist, wobei das Druckbedienungsglied (241) mit dem Schaltschaft (22) durch die Zugstange (26) verbunden ist, so dass der Druckschalter (24) mit dem Schaltschaft (22) verriegelt ist, wobei ein niedriges Ende der Zugstange (26) eine offene Oberfläche ist, die in Verbindung mit einem Installationshohlraum steht, der in der Zugstange (26) angeordnet ist, so dass die Zugstange (26) mit dem Schaltschaft (22) verriegelt ist, wobei ein oberes Ende des Schaltschafts (22) in dem Installationshohlraum durch die offene Oberfläche angeordnet ist und fest mit der Zugstange (26) verbunden ist, wobei der Druckschalter (24) ferner einen Ventilkörper (21) und eine Wasserausschaltfeder (27) aufweist, wobei die Wasserausschaltfeder (27) ferner zwischen dem Druckbedienungsglied (241) und der Zugstange (26) angeordnet ist, um sicherzustellen, dass das Dichtungsglied (23) einen Wasserauslass abdichtet, wenn Wasser gestoppt wird.

2. Der Druckschalterventilkem (2) nach Anspruch 1, **dadurch gekennzeichnet, dass**: das Drehablenkglied (2411) und das Ablenkpassglied (2421) erste Sperrklinkenradneigungsoberflächen (24111) sind.

3. Der Druckschalterventilkern (2) nach Anspruch 2, **dadurch gekennzeichnet, dass**: das Niedrigpositionspositionierungsglied (242) ein drehendes Sperrklingenrad (242) ist, von dem eine Seitenwand umfangsmäßig in Abständen mit einer Vielzahl von Sperrklinkenblöcken angeordnet ist; der Gebedurchlass (2423) zwischen zwei benachbarten Sperrklinkenblöcken definiert ist;
eine Seite der Sperrklinkenblöcke, die dem Druckbedienungsglied (241) zugewandt ist, mit den Sperrklinkenradneigungsoberflächen (2411) angeordnet ist.

4. Der Druckschalterventilkern (2) nach Anspruch 3, **dadurch gekennzeichnet, dass**: das Begrenzungsglied (2412) und das Begrenzungspassglied (2422) zweite Sperrklinkenradneigungsoberflächen (24121) sind; eine dem Druckbedienungsglied (241) abgewandte Seite der Sperrklinkenblöcke mit den zweiten geneigten Sperrklinkenradneigungsoberflächen (24121) angeordnet ist.

5. Der Druckschalterventilkem (2) nach Anspruch 4, **dadurch gekennzeichnet, dass**: das Druckbedienungsglied (241) umfangsmäßig mit einer Vielzahl von Rippen, die unter der ersten Sperrklinkenradneigungsoberfläche (24111) entlang der axialen Richtung angeordnet sind, angeordnet ist; obere Oberflächen der Rippen, die entlang der axialen Richtung angeordnet sind, mit den zweiten Sperrklinkenradneigungsoberflächen (24121) angeordnet sind.

6. Ein Druckschalterventilkern (2) nach einem oder mehreren der Ansprüche 1 bis 5, wobei das Druckbedienungsglied (241) das Dichtungsglied (23) antreibt, um sich entlang einer axialen Richtung des Ventilkörpers (21) zu bewegen, um den Wasserauslass des Ventilkörpers (21) durch den Schaltschaft (22) zu öffnen oder zu schließen.

7. Der Druckschalterventilkem (2) nach Anspruch 6, **dadurch gekennzeichnet, dass**: das Dichtungsglied (23) einen Dichtungsbecher (231) und einen Dichtungsstecker (232), der an einem Ende des Schaltschafts (22) angeordnet ist, aufweist;
wenn sich das Druckbedienungsglied (241) in die niedrige Position bewegt, der Dichtungsstecker (232) ein Druckablassloch (233) des Dichtungsbechers (231) abdichtet, Druck von gespeichertem Wasser in einem Druckhaltehohlraum (235), der zwischen dem Dichtungsbecher (231) und dem Ventilkörper (21) angeordnet ist, ansteigt, und der Dichtungsbecher (231) angetrieben wird, um sich abwärts entlang der axialen Richtung des Ventilkörpers (21) zu bewegen, um den Wasserauslass zu schließen;
wenn sich das Druckbedienungsglied (241) in die hohe Position bewegt, der Dichtungsstecker (232) das Druckablassloch (233) des Dichtungsbechers (231) öffnet, Druck von abgelassenen Wasser in dem Druckhaltehohlraum (235), der zwischen dem Dichtungsbecher (231) und dem Ventilkörper (21) angeordnet ist, absinkt, und der Dichtungsbecher (231) angetrieben wird, um sich aufwärts entlang der axialen Richtung des Ventilkörpers (21) zu bewegen, um den Wasserauslass zu öffnen.

8. Der Druckschalterventilkem (2) nach Anspruch 7, **dadurch gekennzeichnet, dass**: der Schaltschaft (22) mit einer Dichtungsbecher(231)-Basis verriegelt ist, die konfiguriert ist, um mit dem Dichtungsbecher (231) angeordnet zu werden, und wenn sich der Schaltschaft (22) aufwärts bewegt, treibt die Dichtungsbecher(231)-Basis den Dichtungsbecher (231) an, um den Wasserauslass zu öffnen.

9. Ein Wasserhahn, welcher mit dem Druckschalterventilkem (2) nach einem oder mehreren der Ansprüche 6 bis 8 angeordnet ist.

10. Der Hahn nach Anspruch 9, **dadurch gekennzeichnet, dass**: der Hahn ein befestigter Hahn oder ein ausziehbarer Hahn ist.

## Revendications

1. Noyau de vanne à commutateur à bouton-poussoir (2), comprenant un commutateur à bouton-poussoir (24) qui comprend un organe d'actionnement de bouton-poussoir (241) et un organe de positionnement à position basse (242) ;
l'organe d'actionnement de bouton-poussoir (241) se déplace entre une position haute et une position basse le long d'une direction axiale ; l'organe d'actionnement de bouton-poussoir (241) comprend un organe de déviation rotatif (2411) configuré pour coopérer avec l'organe de positionnement à position basse (242) et un organe de limitation (2412) configuré pour être verrouillé à l'organe de positionnement à position basse (242) ;
l'organe de positionnement à position basse (242) comprend un organe d'adaptation de déviation (2421) et un organe d'adaptation de limitation (2422) disposés en haut et en bas le long de la direction axiale et un passage de débouché (2423) pénétrant dans la direction axiale ;
lorsque l'organe d'actionnement de bouton-poussoir (241) est disposé dans la position haute, l'organe de limitation (2412) est aligné sur le passage de débouché (2423), et l'organe de déviation (2411) est séparé de l'organe d'adaptation de déviation (2421) d'une certaine distance le long de la direction axiale ; lorsque l'organe d'actionnement de bouton-poussoir (241) est disposé dans la position basse, l'organe de limitation (2412) passe à travers le passage de débouché (2423), et l'organe de déviation (2411) coopère avec l'organe d'adaptation de déviation (2421) pour amener l'organe de positionnement à position basse (242) à tourner autour de la direction axiale à un certain angle, de sorte que l'organe de limitation (2412) et l'organe d'adaptation de limitation (2422) soient limités vers le haut le long de la direction axiale, dans lequel le commutateur à bouton-poussoir (24) comprend en outre un ressort de travail (25), une extrémité du ressort de travail (25) est une extrémité fixe, et l'autre extrémité vient en butée contre l'organe d'actionnement de bouton-poussoir (241) ; **caractérisé en ce que**
lorsque l'organe d'actionnement de bouton-poussoir (241) est dans la position basse ou dans la position haute, le ressort de travail (25) est toujours dans un état comprimé, dans lequel le noyau de vanne à commutateur à bouton poussoir (2) comprend en outre un organe de scellement (23), une tige de traction (26) et un arbre de commutateur (22), dans lequel l'organe d'actionnement de bouton-poussoir (241) est relié à l'arbre de commutateur (22) par la tige de traction (26), de sorte que le commutateur à bouton-poussoir (24) soit verrouillé à l'arbre de commutateur (22), dans lequel une extrémité libre de la tige de traction (26) est dans une surface ouverte en communication avec une cavité d'installation disposée dans la tige de traction (26), de sorte que la tige de traction (26) soit verrouillée à l'arbre de commutateur (22), dans lequel une extrémité supérieure de l'arbre de commutateur (22) est disposée dans la cavité d'installation à travers la surface ouverte et est reliée fixement à la tige de traction (26), dans lequel le commutateur à bouton poussoir (24) comprend en outre un corps de vanne (21) et un ressort d'arrêt d'eau (27), dans lequel le ressort d'arrêt d'eau (27) est en outre disposé entre l'organe d'actionnement de bouton-poussoir (241) et la tige de traction (26) pour faire en sorte que l'organe de scellement (23) scelle une sortie d'eau lorsque l'eau est arrêtée.

2. Noyau de vanne à commutateur à bouton-poussoir (2) selon la revendication 1, **caractérisé en ce que** : l'organe de déviation rotatif (2411) et l'organe d'adaptation de déviation (2421) sont des premières surfaces inclinées à roue à rochet (24111).

3. Noyau de vanne à commutateur à bouton-poussoir (2) selon la revendication 2, **caractérisé en ce que** : l'organe de positionnement à position basse (242) est une roue à rochet rotative (242) dont une paroi latérale est disposée circonférentiellement avec une pluralité de blocs à rochet à des intervalles ; le passage de débouché (2423) est défini entre deux blocs à rochet adjacents ;
un côté des blocs à rochet faisant face à l'organe d'actionnement de bouton-poussoir (241) est disposé avec les premières surfaces inclinées à roue à rochet (2411).

4. Noyau de vanne à commutateur à bouton-poussoir (2) selon la revendication 3, **caractérisé en ce que** : l'organe de limitation (2412) et l'organe d'adaptation de limitation (2422) sont des secondes surfaces inclinées à roue à rochet (24121) ; un côté des blocs à rochet à l'écart de l'organe d'actionnement de bouton-poussoir (241) est disposé avec les secondes surfaces inclinées à roue à rochet (24121).

5. Noyau de vanne à commutateur à bouton-poussoir (2) selon la revendication 4, **caractérisé en ce que** : l'organe d'actionnement de bouton-poussoir (241) est disposé circonférentiellement avec une pluralité de nervures disposées au-dessous de la première surface inclinée à roue à rochet (24111) le long de la direction axiale ; des surfaces supérieures des nervures disposées le long de la direction axiale sont disposées avec les secondes surfaces inclinées à roue à rochet (24121).

6. Noyau de vanne à commutateur à bouton-poussoir (2) selon l'une des revendications 1 à 5, dans lequel l'organe d'actionnement de bouton-poussoir (241) amène l'organe de scellement (23) à se déplacer le long d'une direction axiale du corps de vanne (21) pour ouvrir ou fermer la sortie d'eau du corps de vanne (21) par l'arbre de commutateur (22).

7. Noyau de vanne à commutateur à bouton-poussoir (2) selon la revendication 6, **caractérisé en ce que** : l'organe de scellement (23) comprend une coupelle de scellement (231) et un bouchon de scellement (232) qui est disposé à une extrémité de l'arbre de commutateur (22) ;
lorsque l'organe d'actionnement de bouton-poussoir (241) se déplace vers la position basse, le bouchon de scellement (232) scelle un trou de détente de pression (233) de la coupelle de scellement (231) une pression d'eau stockée dans une cavité de maintien de pression (235) disposée entre la coupelle de scellement (231) et le corps de vanne (21) augmente, et la coupelle de scellement (231) est amenée à se déplacer vers le bas le long de la direction axiale du corps de vanne (21) pour fermer la sortie d'eau ;
lorsque l'organe d'actionnement de bouton-poussoir (241) se déplace vers la position haute, le bouchon de scellement (232) ouvre le trou de détente de pression (233) de la coupelle de scellement (231), une pression d'eau de détente dans la cavité de maintien de pression (235) disposée entre la coupelle de scellement (231) et le corps de vanne (21) diminue, et la coupelle de scellement (231) est amenée à se déplacer vers le haut le long de la direction axiale du corps de vanne (21) pour ouvrir la sortie d'eau.

8. Noyau de vanne à commutateur à bouton-poussoir (2) selon la revendication 7, **caractérisé en ce que** : l'arbre de commutateur (22) est verrouillé à une base de coupelle de scellement (231) configurée pour être disposée avec la coupelle de scellement (231) et, lorsque l'arbre de commutateur (22) se déplace vers le haut, la base de coupelle de scellement (231) amène la coupelle de scellement (231) à ouvrir la sortie d'eau.

9. Robinet, qui est disposé avec le noyau de vanne à commutateur à bouton-poussoir (2) selon une ou plusieurs des revendications 6 à 8.

10. Robinet selon la revendication 9, **caractérisé en ce que** : le robinet est un robinet fixe ou un robinet gigogne.
